# EUROPÄISCHE PATENTSCHRIFT

(11) **EP 1 066 731 B1**
(45) Veröffentlichungstag und Bekanntmachung des Hinweises auf die Patenterteilung: **22.09.2004**
(21) Anmeldenummer: 99922074.2
(22) Anmeldetag: 25.03.1999
(51) Int. Cl.: H04Q 7/38

(54) **VERFAHREN UND FUNK-KOMMUNIKATIONSSYSTEM ZUR ZUWEISUNG EINES FUNKKANALS**
METHOD AND RADIO COMMUNICATION SYSTEM FOR ALLOCATING A RADIO CHANNEL
PROCEDE ET SYSTEME DE RADIOCOMMUNICATION DESTINE A L'AFFECTATION D'UN RADIOCANAL

(30) Priorität: 30.03.1998 DE 19814123
(43) Veröffentlichungstag der Anmeldung: 10.01.2001
(73) Patentinhaber: SIEMENS AKTIENGESELLSCHAFT, 80333 München (DE)
(72) Erfinder: KOTTKAMP, Meik, D-81369 München (DE); MOHR, Werner, D-81737 München (DE); HAARDT, Martin, D-81477 München (DE); FÄRBER, Michael, D-82515 Wolfratshausen (DE); KLEIN, Anja, D-10709 Berlin (DE); SCHINDLER, Jürgen, D-10555 Berlin (DE)
(86) Internationale Anmeldenummer: PCT/DE1999/000903
(87) Internationale Veröffentlichungsnummer: WO 1999/051050

(56) Entgegenhaltungen:
- EP-A- 0 411 878
- GB-A- 2 288 517
- CHENG M M -L ET AL: "DISTRIBUTED MEASUREMENT-BASED DYNAMIC CHANNEL ASSIGNMENT FOR PERSONAL COMMUNICATIONS" PROCEEDINGS OF THE VEHICULAR TECHNOLOGY CONFERENCE, CHICAGO, JULY 25 - 28, 1995, Bd. 2, Nr. CONF. 45, 25. Juli 1995 (1995-07-25), Seiten 769-773, XP000551638 INSTITUTE OF ELECTRICAL AND ELECTRONICS ENGINEERSISBN: 0-7803-2743-8

## Beschreibung

Die Erfindung betrifft ein Verfahren zur Zuweisung eines Funkkanals in einem Funk-Kommunikationssystem, das jeweils durch mindestens einen Zeitschlitz gebildete Funkkanäle zur Informationsübertragung nutzt, sowie ein entsprechendes Funk-Kommunikationssystem.

Die Zuweisung von Funkkanälen (channel allocation) an Mobilstationen in einem Funk-Kommunikationssystem wird üblicherweise von Funkstationen durchgeführt, die Mobilstationen bzw. Funkteilnehmer in ihren zugeordneten Funkzellen funktechnisch versorgen. Auf dem jeweils durch einen oder mehrere Zeitschlitze gebildeten, zugewiesenen Funkkanal erfolgt die Informationsübertragung über eine Funkschnittstelle. Probleme entstehen bei der Kanalzuweisung dann, wenn Interferenzen der Mobilstationen und/oder der Funkstationen untereinander sowie zwischen Mobilstation und Funkstation auftreten. Insbesondere bei Funk-Kommunikationssystemen mit einem Frequenzwiederholabstand (reuse cluster) gleich Eins ist wegen des hohen Interferenzniveaus ein Soft-Handover, d.h. eine Verbindungsweiterschaltung, erforderlich, bei dem die Mobilstationen bzw. Funkteilnehmer an Zellgrenzen von mindestens zwei Funkstationen gleichzeitig versorgt werden müssen. Dies würde eine Vernetzung der Funkstationen untereinander sowie einen erheblichen zusätzlichen Signalisierungsaufwand mit sich bringen. Darüber hinaus wird die Gesamtkapazität des Funk-Kommunikationssystems durch Teilnehmer bzw. Mobilstationen, die sich in einem derartigen Soft-Handover-Bereich aufhalten, vermindert.

Aus der EP 0 411 878 A2 ist eine Anordnung zum Management der Leistungsregelung für Funkkanäle in einem Funk-Kommunikationssystem mit mehreren Basisstationen und Mobilstationen bekannt. Dabei wird den Funkkanälen jeweils eine individuelle Sende/Empfangs-Leistung abhängig von den vorherrschenden Übertragungsbedingungen zugewiesen.

Aus der GB 2 288 517 ist ein Funk-Kommunikationssystem bekannt, bei dem die Funkkanäle hinsichtlich ihrer Interferenzpegel überwacht und mit einem Referenz-Pegel verglichen werden. Ein neuer Kanal wird dann ausgewählt, wenn dieser einen gegenüber dem Referenz-Pegel niedrigeren Pegel aufweist.

Aus dem Aufsatz "Distributed Measurement-based Dynamic Channel Assignment for Personal Communications", IEEE, Bd. 2, Nr. CONF.45, 25.Juli 1995 ist ein Verfahren zur dynamischen Zuteilung von Übertragungskanälen bei unterschiedlichen Bedingungen in einem Kommunikationssystem beschrieben. Dabei wird ein Zuweisungs-Algorithmus vorgeschlagen, der nach dem Prinzip der geringsten Interferenz arbeitet.

Es ist daher Aufgabe der Erfindung, ein verbessertes Verfahren und Funk-Kommunikationssystem zur Zuweisung eines Funkkanals anzugeben.

Diese Aufgabe wird gemäß der Erfindung durch die Merkmale des Patentanspruchs 1 hinsichtlich des Verfahrens und durch die Merkmale des Patentanspruchs 11 hinsichtlich des Funk-Kommunikationssystems gelöst. Weiterbildungen der Erfindung sind den Unteransprüchen zu entnehmen.

Ausgehend von einer Kanalzuweisung in einem Funk-Kommunikationssystem mit Zeitschlitzen sieht der Gegenstand der Erfindung vor, daß von einer Funkstation der Funkkanal für die Abwärtsrichtung abhängig von einem die Sendeleistungen für die Zeitschlitze angebenden Kanalzuweisungsmuster einer Mobilstation zugewiesen wird, und von der Mobilstation die Zuweisung des Funkkanals abhängig von einem die Interferenzleistungen der Zeitschlitze angebenden Interferenzmuster mobilstationsgesteuert korrigiert wird.

Durch die Zuweisung abhängig von der Belegung der Zeitschlitze gemäß dem Kanalzuweisungsmuster wird eine möglichst gleichmässige Verteilung der Sendeleistung auf die vorhandenen Zeitschlitze von der Funkstation in der Abwärtsrichtung erreicht. Durch die Kombination mit der mobilstationsgesteuerten Korrekturmöglichkeit für den zugewiesenen Zeitschlitz - zu einem Zeitschlitz mit geringerer Interferenzleistung anhand des Interferenzmuster hin - läßt sich der Soft-Handover mit seinen Nachteilen vermeiden, selbst bei einem für Interferenzen kritischen Frequenzwiederholabstand (Cluster reuse) gleich Eins. Vorzugsweise wendet die Mobilstation ein schnelles MAHO-Verfahren (Mobile Assisted Handover) zur Korrektur an.

Gemäß einer vorteilhaften Weiterbildung der Erfindung wird von der Mobilstation für den Fall, daß das Interferenzmuster an der Mobilstation eine hohe Interferenzleistung für den Zeitschlitz des zugewiesenen Funkkanals aufweist, ein Umschalten von dem zugewiesenen Zeitschlitz zu einem anderen Zeitschlitz mit einer geringeren Interferenzleistung veranlaßt.

Eine Kombination des auf einer Zeitschlitzstruktur basierenden Verfahrens - beispielsweise TDMA- oder TDD-Verfahren - mit einer teilnehmerspezifischen Feinstruktur zur Unterscheidung der Informationsübertragung in ein- und demselben Zeitschlitz - wie beispielsweise dem CDMA- (Code Division Multiple Access) Verfahren oder dem SDMA- (Space Division Multiple Access) Verfahren - ist besonders günstig.

Die Erfindung wird im folgenden bezugnehmend auf zeichnerische Darstellungen anhand eines Ausführungsbeispiels näher erläutert. Im einzelnen zeigen
- FIG 1: eine schematische Darstellung eines Funk-Kommunikationssystems,
- FIG 2: eine schematische Darstellung der Verteilung der Sendeleistungen gemäß einem Kanalzuweisungsmuster an der Funkstation, und
- FIG 3: eine schematische Darstellung der Verteilung der Interferenzleistungen gemäß einem Interferenzmuster an der Mobilstation,

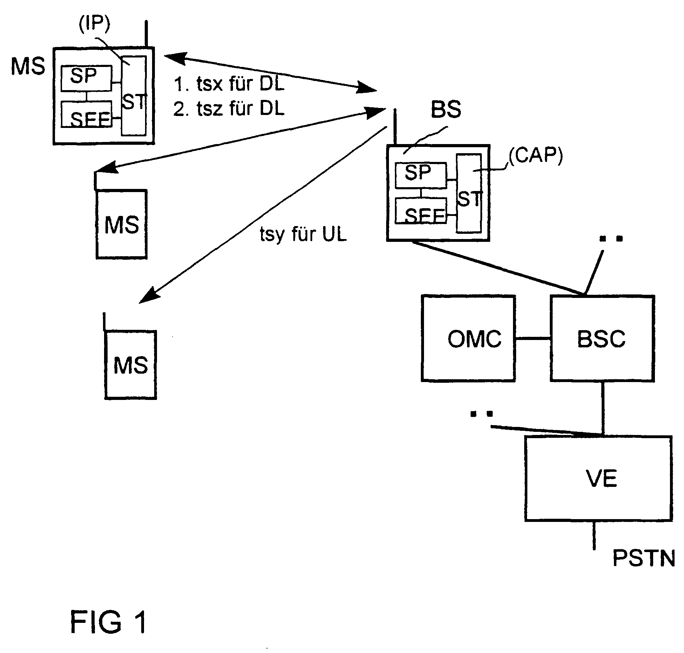

Das Funk-Kommunikationssystems nach FIG 1 weist zumindest eine Vermittlungseinrichtung VE auf, die mit weiteren Vermittlungseinrichtungen vernetzt ist bzw. den Netzübergang zu einem Festnetz PSTN herstellt. Sie ist mit zumindest einer Funkteilsteuerung BSC verbunden, die wiederum an eine Funkstation BS angeschlossen ist. Zwischen der Funkstation BS und Mobilstationen MS besteht eine Funkschnittstelle, über die Teilnehmersignale von beispielsweise drei Verbindungen übertragen werden.

Dem Funk-Kommunikationssystem ist weiterhin ein Betriebs- und Wartungszentrum OMC zugehörig, das mit der Vermittlungsstelle VE und/oder der Funksteuerung BSC verbunden ist und zur Überwachung der Leistungsparameter des Funk-Kommunikationssystems und zur Wartung und Fehlerkontrolle dient. Das Betriebs- und Wartungszentrum kann auch nur für Teilkomponenten des Funk-Kommunikationssystems, z.B. für das Funkteilsystem vorgesehen sein.

Für die Funkschnittstelle zwischen der Funkstation BS und den Mobilstationen MS wird ein Funkkanal betrachtet, der für die jeweilige Verbindung durch einen oder mehrere Zeitschlitze, wie beim TDMA-Verfahren oder beim TDD-Verfahren, gebildet wird. Darüber hinaus ist der Funkkanal auch durch eine Frequenzcharakterisiert. Der Zeitschlitz umfasst zur Trennung mehrerer Teilnehmersignale vorzugsweise mehrere CDMA-Spreizcodes oder Trainingssequenzen mit unterschiedlichen Einfallsrichtungen, die durch ein Antennenfeld der Funkstation BS mit nachgeordneter Signalverarbeitung empfangen werden. Das im folgenden geschilderte Verfahren ist jedoch auch einsetzbar, wenn eine anderweitige Teilnehmerseparierung erfolgt. Für die Separierung der Teilnehmer durch ihren Spreizcode werden auf der Sendeseite, für die Abwärtsrichtung beispielsweise in der Funkstation BS, die Teilnehmersignale mit dem Teilnehmercode moduliert und auf der Empfangsseite anhand der dort vorliegende Teilnehmercodes nach dem JD-CDMA-Verfahren (Joint Detection) detektiert. Jede Funkstation BS sowie jede Mobilstation MS weist üblicherweise eine Sende/Empfangseinrichtung SEE, eine Speichereinrichtung SP und eine Steuereinrichtung ST auf, die die Aufgaben und Funktionen zur Durchführung der Erfindung übernehmen. Es sei angenommen, daß das Funk-Kommunikationssystem eine Clusterung mit einem Frequenzwiederholabstand gleich Eins aufweist.

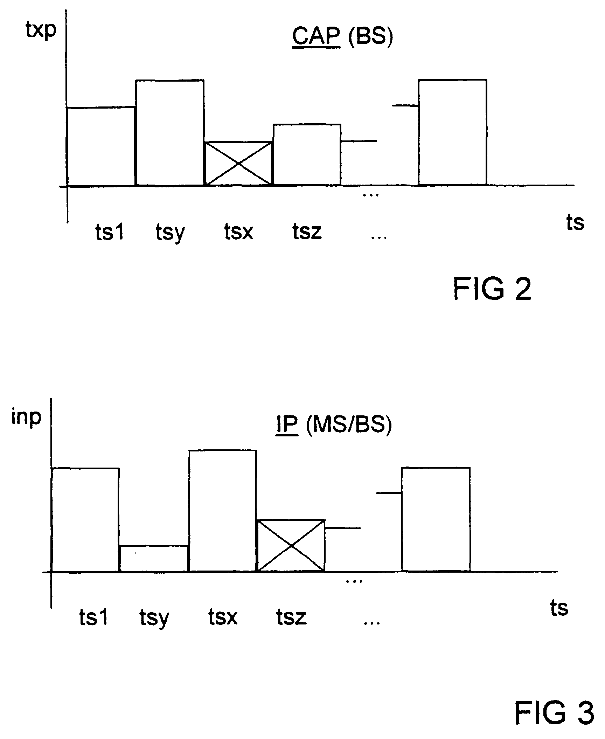

Die Funkstation BS kennt die aktuelle Funkkanalzuweisung für die Abwärtsrichtung DL (downlink). In dem zeitschlitzgesteuerten System entspricht dies der Verteilung der Sendeleistungen auf die vorhandenen Zeitschlitze (siehe FIG 2) und gegebenenfalls Spreizcodes. Der Funkstation BS bzw. deren Steuereinrichtung ST hat somit Kenntnis von ihrem momentanen Kanalzuweisungsmuster CAP (channel allocation pattern), in dem die Sendeleistungen für die Zeitschlitze angegen sind. Die Funkstation BS weist der Mobilstation MS für die Verbindung abhängig von ihrem Kanalzuweisungsmuster CAP einen Funkkanal, gebildet z.B. durch den Zeitschlitz tsx in FIG 2, für die Abwärtsrichtung zu. Vorzugsweise wird ein Zeitschlitz gewählt, in dem die Belegung gering ist, sodaß die Sendeleistung möglichst gleichförmig auf alle zur Verfügung stehenden Zeitschlitze verteilt werden. Nach der Zuweisung des Funkkanals, der der Mobilstation MS über die Funkschnittstelle signalisiert wird, überprüft die Mobilstation MS bzw. deren Steuereinrichtung ST, ihre Interferenzsituation anhand eines Interferenzmusters IP (Interference Pattern). Darin sind die Interferenzleistungen der einzelnen Zeitschlitze angegeben, siehe Beispiel in FIG 3.

Stellt die Funkstation BS anhand des Interferenzmusters IP - wie im vorliegenden Fall - fest, daß die Interferenzleistung im zugewiesenen Funkkanal - siehe Zeitschlitz tsx gemäß FIG 3 - hoch und damit kritisch ist, veranlaßt sie ein Umschalten zu einem anderen Zeitschlitz, z.B. tsz, mit niedrigerer Interferenzleistung im Interferenzmuster IP. Vorzugsweise erfolgt durch die Mobilstation bzw. die Steuereinrichtung ST ein schneller Hard-Handover MAHO (Mobile Assisted Handover) zu dem neuen Zeitschlitz und damit eine Korrektur des von der Funkstation BS zugewiesenen Zeitschlitzes tsx für die Abwärtsrichtung. Die von der Mobilstation MS durchgeführte Korrektur wird über die Funkschnittstelle der Funkstation BS signalisiert. Das Interferenzmuster IP an der Mobilstation MS ergibt sich aus einer Überlagerung der Kanalzuweisungsmuster CAP mehrerer, vorzugsweise benachbarter Funkstationen BS. Daher unterscheidet sich üblicherweise das Kanalzuweisungsmuster CAP an der Funkstation BS vom Interferenzmuster IP an der Mobilstation MS. Von der Funkstation BS wird vorzugsweise auch der Funkkanal für die Aufwärtsrichtung UL (uplink) abhängig von dem Interferenzmuster IP der empfangenen Zeitschlitze der Mobilstation MS zugewiesen. Im vorliegenden Beispiel wählt die Funkstation BS den vom Zeitschlitz tsy gebildeten Funkkanal mit der momentan geringsten Interferenzleistung für die Verbindung mit einer neuen Mobilstation MS aus, und teilt ihn der jeweiligen Mobilstation MS mit.

Der Vorteil der Kanalzuweisung gemäß der Erfindung liegt in der Kombination einer Zuweisung des Funkkanals durch die Funkstation BS anhand der aktuellen Belegung hinsichtlich der Sendeleistungen mit einem von der Mobilstation gesteuerten schnellen Intrazell-Handover zu einem Zeitschlitz mit geringer Interferenzleistung anhand des aktuellen Interferenzmusters.

FIG 2 und FIG 3 zeigen Beispiele für die Muster CAP, IP an der Funkstation BS und Mobilstation MS. Der Einfachheit halber ist das Interferenzmuster IP an der Funkstation BS zur Zuweisung des Funkkanals - Zeitschlitz tsy - für die Aufwärtsrichtung identisch mit dem Interferenzmuster IP an der Mobilstation MS zur Korrektur des zugewiesenen Funkkanals - vom Zeitschlitz tsx zum Zeitschlitz tsz. Sie unterscheiden sich üblicherweise. Das Kanalzuweisungsmuster CAP basiert auf der Verteilung der Sendeleistung txp mit unterschiedlichen Leistungswerten auf die Zeitschlitze ts1, tsy, tsx, tsz..., während das Interferenzmuster IP den Zeitschlitzen ts1, tsy, tsx, tsz... jeweils eine Interferenzleistung inp unterschiedlicher Leistungswerte zuordnet.

## Patentansprüche

1. Verfahren zur Zuweisung eines Funkkanals in einem Funk-Kommunikationssystem, das jeweils durch mindestens einen Zeitschlitz (ts1...) gebildete Funkkanäle zur Informationsübertragung nutzt,
**dadurch gekennzeichnet**
- **daß** von einer Funkstation (BS) der Funkkanal (tsx) für die Abwärtsrichtung abhängig von einem die Sendeleistungen (txp) für die Zeitschlitze angebenden Kanalzuweisungsmuster (CAP) einer Mobilstation (MS) zugewiesen wird, und
- **daß** von der Mobilstation (MS) die Zuweisung des Funkkanals (tsx) abhängig von einem die Interferenzleistungen (inp) der Zeitschlitze angebenden Interferenzmuster (IP) mobilstationsgesteuert korrigiert wird.

2. Verfahren nach Anspruch 1, bei dem
von der Mobilstation (MS) für den Fall, daß das Interferenzmuster (IP) an der Mobilstation (MS) eine hohe Interferenzleistung für den Zeitschlitz (tsx) des zugewiesenen Funkkanals aufweist, ein Umschalten von dem zugewiesenen Zeitschlitz (tsx) zu einem anderen Zeitschlitz (tsz) mit einer geringeren Interferenzleistung veranlaßt wird.

3. Verfahren nach Anspruch 1 oder 2, bei dem
das Interferenzmuster (IP) durch Überlagerung von Kanalzuweisungsmustern (CAP) mehrerer Funkstationen (BS) gebildet wird.

4. Verfahren nach Anspruch 3, bei dem
das Interferenzmuster (IP) durch Überlagerung von Kanalzuweisungsmustern (CAP) benachbarter Funkstationen (BS) gebildet wird.

5. Verfahren nach einem der vorhergehenden Ansprüche, bei dem zur gleichzeitigen Übertragung von Informationen zu mehreren Mobilstationen (MS) die Informationen anhand einer teilnehmerspezifischen Feinstruktur in dem Zeitschlitz unterschieden werden.

6. Verfahren nach Anspruch 5, bei dem
Spreizcodes gemäß einem CDMA-Verfahren zur teilnehmerspezifischen Feinstruktur verwendet werden.

7. Verfahren nach Anspruch 5, bei dem
räumliche Einfallsrichtungen von Trainingssequenzen gemäß einem SDMA-Verfahren zur teilnehmerspezifischen Feinstruktur verwendet werden.

8. Verfahren nach einem der vorhergehenden Ansprüche, bei dem die Funkkanäle von Zeitschlitzen eines TDMA- oder eines TDD-Zugriffsverfahrens gebildet werden.

9. Verfahren nach einem der vorhergehenden Ansprüche, bei dem von der Funkstation (BS) der Funkkanal für die Aufwärtsrichtung abhängig von dem Interferenzmuster (IP) der empfangenen Zeitschlitze der Mobilstation (MS) zugewiesen wird

10. Verfahren nach Anspruch 9, bei dem
von der Funkstation (BS) der Funkkanal mit der momentan geringsten Interferenzleistung für die Verbindung mit einer neuen Mobilstation (MS) ausgewählt wird.

11. Funk-Kommunikationssystem zur Zuweisung eines Funkkanals, das jeweils durch mindestens einen Zeitschlitz (ts1...) gebildete Funkkanäle zur Informationsübertragung nutzt,
**gekennzeichnet durch**
- eine Funkstation (BS) zur Zuweisung des Funkkanals (tsx) für die Abwärtsrichtung an eine Mobilstation (MS) abhängig von einem die Sendeleistungen (txp) für die Zeitschlitze angebenden Kanalzuweisungsmuster (CAP), und
- die Mobilstation (MS) zum mobilstationsgesteuerten Korrigieren der Zuweisung des Funkkanals (tsx) abhängig von einem die Interferenzleistungen (inp) der Zeitschlitze angebenden Interferenzmuster (IP).

## Claims

1. Method for allocating a radio channel in a radio communications system that uses, for information transfer, radio channels each formed by at least one time slot (ts1...),
**characterized in that**
- the radio channel (tsx) for the downlink direction is allocated to a mobile station (MS) by a base station (BS) on the basis of a channel-allocation pattern (CAP) describing the transmit powers (txp) for the time slots, and
- the allocation of the radio channel (tsx) is corrected by the mobile station (MS) under mobile-station control on the basis of an interference pattern (IP) describing the interference powers (inp) of the time slots.

2. Method according to Claim 1, in which
in the event that the interference pattern (IP) at the mobile station (MS) has a high interference power for the time slot (tsx) of the allocated radio channel, the mobile station (MS) causes the allocated time slot (tsx) to change to a different time slot (tsz) having a lower interference power.

3. Method according to Claim 1 or 2, in which
the interference pattern (IP) is formed by superimposing channel allocation patterns (CAP) of a plurality of base stations (BS).

4. Method according to Claim 3, in which
the interference pattern (IP) is formed by superimposing channel allocation patterns (CAP) of adjacent base stations (BS).

5. Method according to one of the preceding claims, in which
for simultaneous transfer of information to a plurality of mobile stations (MS), the information is differentiated within the time slot by a user-specific fine-coding.

6. Method according to Claim 5, in which
spreader codes in accordance with a CDMA technique are used for user-specific fine-coding.

7. Method according to Claim 5, in which
spatial incident directions of training sequences in accordance with an SDMA technique are used for user-specific fine-coding.

8. Method according to one of the preceding claims, in which
the radio channels are formed by time slots of a TDMA or a TDD access technique.

9. Method according to one of the preceding claims, in which
the radio channel for the uplink direction is allocated to the mobile station (MS) by the base station (BS) on the basis of the interference pattern (IP) of the received time slots.

10. Method according to Claim 9, in which
the radio channel having the lowest interference power at that instant is selected by the base station (BS) for the connection to a new mobile station (MS).

11. Radio communications system for allocating a radio channel that uses, for information transfer, radio channels each formed by at least one time slot (ts1...),
**characterized by**
- a base station (BS) for allocating the radio channel (tsx) for the downlink direction to a mobile station (MS) on the basis of a channel-allocation pattern (CAP) describing the transmit powers (txp) for the time slots, and
- the mobile station (MS) for correcting under mobile-station control the allocation of the radio channel (tsx) on the basis of an interference pattern (IP) describing the interference powers (inp) of the time slots.

## Revendications

1. Procédé pour l'affectation d'un canal radio dans un système de radiocommunication qui utilise pour la transmission d'information des canaux radio formés respectivement par au moins un créneau temporel (ts1...),
**caractérisé**
**en ce qu'**une station radio (BS) attribue à une station mobile le canal radio (tsx) pour le sens descendant en fonction d'un modèle d'affectation de canal (CAP) indiquant les puissances d'émission (txp) pour les créneaux temporels, et
**en ce que** la station mobile (MS) corrige et contrôle l'affectation du canal radio (tsx) en fonction d'un modèle d'interférence (IP) indiquant les puissances d'interférence (inp) des créneaux temporels.

2. Procédé selon la revendication 1, dans lequel
la station mobile (MS) demande une commutation du créneau temporel (tsx) affecté vers un autre créneau temporel (tsz) avec une plus faible puissance d'interférence dans le cas où le modèle d'interférence (IP) concernant la station mobile (MS) présente une puissance d'interférence élevée pour le créneau temporel (tsx) du canal radio affecté.

3. Procédé selon la revendication 1 ou 2, dans lequel
le modèle d'interférence (IP) est formé par la superposition de modèles d'affectation de canal (CAP) de plusieurs stations radio (BS).

4. Procédé selon la revendication 3, dans lequel
le modèle d'interférence (IP) est formé par superposition de modèles d'affectation de canal (CAP) de stations radio (BS) voisines.

5. Procédé selon l'une quelconque des revendications précédentes, dans lequel les informations sont différenciées à l'aide d'une structure fine spécifique à l'abonné dans le créneau temporel pour la transmission simultanée d'informations à plusieurs stations mobiles (MS).

6. Procédé selon la revendication 5, dans lequel
des codes d'écartement sont utilisés selon un procédé CDMA pour la structure fine spécifique à l'abonné.

7. Procédé selon la revendication 5, dans lequel
des directions d'incidence de séquences d'entraînement dans l'espace sont utilisées selon un procédé SDMA pour la structure fine spécifique à l'abonné.

8. Procédé selon l'une quelconque des revendications précédentes, dans lequel les canaux radio sont formés par des créneaux temporels d'un procédé d'accès TDMA ou d'un procédé d'accès TDD.

9. Procédé selon l'une quelconque des revendications précédentes, dans lequel la station radio (BS) attribue à la station mobile (MS) le canal radio pour le sens montant en fonction du modèle d'interférence (IP) des créneaux temporels reçus.

10. Procédé selon la revendication 9, dans lequel la station radio (BS) choisit le canal radio avec la puissance d'interférence momentanément la plus faible pour la liaison avec une nouvelle station mobile (MS).

11. Système de radiocommunication pour l'affectation d'un canal radio, qui utilise pour la transmission d'information des canaux radio formés respectivement par au moins un créneau temporel (ts1...),
**caractérisé par**
- une station radio (BS) pour l'affectation du canal radio (tsx) pour le sens descendant concernant une station mobile (MS) en fonction d'un canal d'affectation de canal (CAP) indiquant les puissances d'émission (txp) pour les créneaux temporels, et
- la station mobile (MS) pour la correction, commandée par la station mobile, de l'affectation du canal radio (tsx) en fonction d'un modèle d'interférence (IP) indiquant les puissances d'interférence (inp) des créneaux temporels.
